# EUROPÄISCHE PATENTANMELDUNG

(11) **EP 3 968 050 A1**
(43) Veröffentlichungstag der Anmeldung: **16.03.2022**
(21) Anmeldenummer: 21183971.7
(22) Anmeldetag: 06.07.2021
(51) Int. Cl.: G01S 13/04, G01S 13/56, G01S 13/88

(54) **VERFAHREN ZUM ERFASSEN VON PERSONEN UND/ODER OBJEKTEN IM INNENRAUM EINES KRAFTFAHRZEUGS UND KRAFTFAHRZEUG**

(30) Priorität: 30.07.2020 DE 102020209650
(71) Anmelder: VOLKSWAGEN AG, 38440 Wolfsburg (DE)
(72) Erfinder: Ette, Bernd, 38442 Wolfsburg (DE)

(57) **Zusammenfassung**

Die Erfindung betrifft ein Verfahren zum Erfassen von Personen (20) und/oder Objekten im Innenraum (52) eines Kraftfahrzeugs (50), wobei Personen (20) und/oder Objekte im Innenraum des Kraftfahrzeugs (50) mittels mindestens zwei UWB-Antennen (1-x) erfasst werden, die jeweils in oder an unterschiedlichen Türen (51) des Kraftfahrzeugs (50) angeordnet sind und einer Kommunikation mit mindestens einem ID-Geber (10) und/oder einer Fernbedienung zumindest zum Ver- und Entriegeln der Türen (51) dienen, und wobei mittels der mindestens zwei UWB-Antennen (1-x) erfasste Signale mittels einer Steuereinrichtung (2) ausgewertet werden und ein Auswertungsergebnis (3) bereitgestellt wird. Ferner betrifft die Erfindung ein Kraftfahrzeug (50).

## Beschreibung

Die Erfindung betrifft ein Verfahren zum Erfassen von Personen und/oder Objekten im Innenraum eines Kraftfahrzeugs und ein Kraftfahrzeug.

Es ist bekannt, eine Anwesenheit und einen Zustand von Personen im Innenraum eines Kraftfahrzeugs mittels Sensoren zu erfassen. Bekannt sind Lösungen, die Ultraschall- oder Radarsensoren verwenden. Auch ein Erfassen mittels einer Kamera ist bekannt.

Aus der EP 2 157 665 A1 ist eine UWB-Antenne für Transportmittel bekannt. Die UWB-Antenne umfasst einen Metallschirm, ein dielektrisches Substrat und einen rechteckig bedruckten Metallpatch. Das dielektrische Substrat ist auf dem gedruckten Metallpatch angeordnet. Der gedruckte Metallpatch ist auf dem dielektrischen Substrat angeordnet und weist einen horizontalen Grabenspalt und zwei vertikale Grabenspalte auf. Der horizontale Grabenspalt verläuft parallel zur langen Seite des rechteckig bedruckten Metallpatches, und die vertikalen Grabenspalte erstrecken sich jeweils von jedem Ende des horizontalen Grabenspalts nach oben, um zwei Resonanzkonturen zu bilden, das heißt die Grabenspalte für einen U-förmigen Schlitz.

Der Erfindung liegt die Aufgabe zu Grunde, ein Verfahren zum Erfassen von Personen und/oder Objekten im Innenraum eines Kraftfahrzeugs und ein Kraftfahrzeug zu verbessern.

Die Aufgabe wird erfindungsgemäß durch ein Verfahren mit den Merkmalen des Patentanspruchs 1 und ein Kraftfahrzeug mit den Merkmalen des Patentanspruchs 10 gelöst. Vorteilhafte Ausgestaltungen der Erfindung ergeben sich aus den Unteransprüchen.

Insbesondere wird ein Verfahren zum Erfassen von Personen und/oder Objekten im Innenraum eines Kraftfahrzeugs zur Verfügung gestellt, wobei Personen und/oder Objekte im Innenraum des Kraftfahrzeugs mittels mindestens zwei UWB-Antennen erfasst werden, die jeweils in oder an unterschiedlichen Türen des Kraftfahrzeugs angeordnet sind und einer Kommunikation mit mindestens einem ID-Geber und/oder einer Fernbedienung zumindest zum Ver- und Entriegeln der Türen dienen, und wobei mittels der mindestens zwei UWB-Antennen erfasste Signale mittels einer Steuereinrichtung ausgewertet werden und ein Auswertungsergebnis bereitgestellt wird.

Ferner wird insbesondere ein Kraftfahrzeug geschaffen, umfassend mindestens zwei UWB-Antennen, wobei die mindestens zwei UWB-Antennen jeweils in oder an unterschiedlichen Türen des Kraftfahrzeugs angeordnet sind, und wobei die mindestens zwei UWB-Antennen einer Kommunikation mit mindestens einem ID-Geber und/oder einer Fernbedienung zumindest zum Ver- und Entriegeln der Türen dienen, und wobei die mindestens zwei UWB-Antennen dazu eingerichtet sind, Personen und/oder Objekte im Innenraum des Kraftfahrzeugs zu erfassen; und eine Steuereinrichtung, wobei die Steuereinrichtung dazu eingerichtet ist, mittels der mindestens zwei UWB-Antennen erfasste Signale auszuwerten und ein Auswertungsergebnis bereitzustellen.

Das Verfahren und das Kraftfahrzeug ermöglichen es, das Erfassen von Personen und/oder Objekten im Innenraum eines Kraftfahrzeugs, insbesondere im Hinblick auf einen Aufwand und Herstellungskosten des Kraftfahrzeugs, zu verbessern. Dies erfolgt, indem zum Bereitstellen einer ferngesteuerten Ver- und Entriegelung verwendete in oder an unterschiedlichen Türen des Kraftfahrzeugs angeordnete UWB-Antennen zusätzlich auch zum Erfassen von Personen und/oder Objekten im Innenraum des Kraftfahrzeugs genutzt werden. Eine in einer Tür eines Kraftfahrzeugs verbaute UWB-Antenne, die einer Kommunikation mit einem ID-Geber und/oder einer Fernbedienung dient, weist beispielsweise einen in ein äußeres Umfeld des Kraftfahrzeugs gerichteten Sende- und Empfangswinkelbereich, beispielsweise von 160°, auf. Gleichzeitig weist die UWB-Antenne einen in einen Innenraum hinein gerichteten Sende- und Empfangswinkelbereich, von beispielsweise ebenfalls 160°, auf. Die UWB-Antenne kann daher insbesondere sowohl für eine Anwendung außerhalb des Kraftfahrzeugs als auch zusätzlich für eine Anwendung im Innenraum des Kraftfahrzeugs genutzt werden. Da die UWB-Antennen an oder in unterschiedlichen Türen angeordnet sind, durchlaufen nach Innen ausgesandte Signale den Innenraum des Kraftfahrzeugs und können auch von anderen der mindestens zwei UWB-Antennen, z.B. von einer an einer gegenüberliegenden Tür angeordneten UWB-Antenne, erfasst werden. Die UWB-Antennen sind insbesondere derart angeordnet, dass diese nach außen hin nicht von Metall bedeckt werden; beispielsweise können die UWB-Antennen in oder an einem Bereich direkt unterhalb einer Glasscheibe einer Tür des Fahrzeugs angeordnet sein, beispielsweise dort, wo in älteren Fahrzeugen ein Verriegelungsknopf angeordnet war. Eine UWB-Antenne kann in einem aktiven Betriebsmodus betrieben werden, bei der eine Kommunikation zwischen einer UWB-Antenne und einer anderen UWB-Antenne erfolgt. Ferner kann eine UWB-Antenne auch in einem passiven Betriebsmodus betrieben werden, bei dem ein Impulssignal ausgesandt wird und durch Personen oder Objekte reflektierte Strahlung von der gleichen UWB-Antenne erfasst wird. Der passive Betriebsmodus kann auch als Radar-Betriebsmodus bezeichnet werden. Die von den unterschiedlichen UWB-Antennen erfassten Signale werden von der Steuereinrichtung ausgewertet und ein Auswertungsergebnis wird bereitgestellt. Hierbei können insbesondere eine Laufzeit, eine richtungsabhängige Signalabschwächung (Signaldämpfung) und/oder die im passiven Betriebsmodus erfassten Reflexionen an Personen und/oder Objekten ausgewertet werden, beispielsweise indem erfasste Signale mehrerer UWB-Antennen miteinander fusioniert und/oder korreliert werden und/oder mit Referenzmessungen verglichen werden, um auf diese Weise eine Information über Personen und/oder Objekte im Innenraum des Kraftfahrzeugs abzuleiten. Im einfachsten Fall umfasst das Auswertungsergebnis beispielsweise eine Information darüber, ob sich eine Person oder ein Objekt im Innenraum befinden oder nicht.

Ein Vorteil des Verfahrens und des Kraftfahrzeugs ist, dass Kosten für eine zusätzliche Sensorik im Innenraum des Kraftfahrzeugs eingespart werden können, da UWB-Antennen verwendet werden, die ohnehin für eine Kommunikation mit einem ID-Geber und/oder einer Fernbedienung zum Ver- und Entriegeln der Türen des Kraftfahrzeugs eingesetzt werden.

Eine Ultra Wide Band (UWB)-Antenne umfasst insbesondere eine Antenne und einen Transceiver zum Senden und Empfangen von Ultrabreitband-Signalen. Ferner kann die UWB-Antenne auch eine Steuerung, beispielsweise in Form eines Mikrocontrollers, umfassen. Eine UWB-Antenne ist insbesondere dazu ausgebildet, um in einem Frequenzbereich von ca. 3 bis ca. 10 GHz betrieben zu werden.

Die Steuereinrichtung kann einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

Das Auswerten kann grundsätzlich den Einsatz von Verfahren des Maschinenlernens umfassen. Beispielsweise kann vorgesehen sein, ein (trainiertes) Maschinenlernverfahren zum Auswerten der von den UWB-Antennen erfassten Signale zu verwenden, um beispielsweise eine Sitzbelegung und/oder sonstige Größen oder Parameter im Innenraum des Kraftfahrzeugs zu schätzen.

In einer Ausführungsform ist vorgesehen, dass das Erfassen sowohl in einem aktiven Betriebsmodus als auch in einem passiven Betriebsmodus der mindestens zwei UWB-Antennen erfolgt. Im aktiven Betriebsmodus kommunizieren die UWB-Antennen jeweils paarweise miteinander. Bei einer solchen Kommunikation kann insbesondere eine Empfangsleistung bestimmt werden. Wurde eine Referenzmessung für einen Innenraum des Kraftfahrzeugs ohne Personen oder Objekte durchgeführt, stehen Referenzwerte für eine erfasste Leistung bzw. eine Signalabschwächung zur Verfügung und können mit aktuell erfassten bzw. bestimmten Werten verglichen werden. Hierdurch lässt sich beispielsweise feststellen, ob in einem Signalweg zwischen zwei UWB-Antennen eine Person oder ein Objekt angeordnet ist oder nicht. Auch eine Änderung einer Position einer Person oder eines Objektes im Innenraum des Kraftfahrzeugs kann über eine Auswertung einer Änderung von den erfassten Werten, wie z.B. von einer Empfangsleistung oder von einer Signalabschwächung, bestimmt werden.

In einer Ausführungsform ist vorgesehen, dass in einem passiven Betriebsmodus von einer UWB-Antenne ausgesandte Signale auch von anderen UWB-Antennen erfasst werden, wobei die jeweils erfassten Signale der anderen UWB-Antennen ebenfalls ausgewertet werden. Anders ausgedrückt sendet eine der UWB-Antennen im passiven Betriebsmodus insbesondere Impulse aus, die (bzw. deren Reflexionen) nicht nur von der sendenden UWB-Antenne erfasst werden, sondern auch von den anderen UWB-Antennen. Eine Auswertung kann insbesondere ein Bestimmen von Laufzeiten und/oder von Signalstärken umfassen, um auf eine Anwesenheit und/oder einen Zustand von Personen und/oder Objekten im Innenraum zu schließen. Da die erfassten Signale jeweils unterschiedliche Signalwege durch den Innenraum des Kraftfahrzeugs durchlaufen haben, die von Personen und/oder Objekten im Innenraum beeinflusst werden, lässt sich hierdurch ein detaillierteres Abbild des Innenraums bestimmen.

In einer Ausführungsform ist vorgesehen, dass das Auswerten ein Bestimmen einer Position und/oder einer Positionsänderung einer erfassten Person und/oder eines erfassten Objektes im Innenraum des Kraftfahrzeugs aus den erfassten Signalen der mindestens zwei UWB-Antennen umfasst. Über die bestimmte Position und/oder die bestimmte Positionsänderung kann beispielsweise eine Sitzplatzbelegung einzelner Sitze des Kraftfahrzeugs bestimmt werden. Eine Position lässt sich insbesondere aus den Reflexionen im passiven Betriebsmodus bestimmen. Eine Positionsänderung lässt sich aus einer Änderung der Reflexionen bzw. der Positionen bestimmen.

In einer Ausführungsform ist vorgesehen, dass das Auswerten ein Berechnen eines dreidimensionalen Abbildes des Innenraums des Kraftfahrzeugs aus den erfassten Signalen der mindestens zwei UWB-Antennen umfasst. Das berechnete dreidimensionalen Abbild kann beispielsweise als Eingangsdatum einer Assistenz- oder Überwachungsfunktion des Kraftfahrzeugs zugeführt werden.

In einer Ausführungsform ist vorgesehen, dass in einem aktiven Betriebsmodus der mindestens zwei UWB-Antennen mindestens ein Abstand zwischen den mindestens zwei UWB-Antennen bestimmt wird, wobei der bestimmte mindestens eine Abstand mit mindestens einem vorgegebenen Abstandswert verglichen wird, und wobei das Erfassen von Personen und/oder Objekten im Innenraum des Kraftfahrzeugs gestartet wird, wenn das Vergleichsergebnis ergibt, dass der bestimmte Abstand dem mindestens einen vorgegebenen Abstandswert entspricht. Hierdurch kann das Verfahren insbesondere immer dann gestartet werden, wenn die Türen geschlossen sind. Das Verfahren kann hierdurch effizienter, insbesondere zielgerichteter und energiesparender eingesetzt werden. Da ein Abstand zwischen den UWB-Antennen bei geschlossenen Türen bekannt ist, kann durch den Vergleich auf einen Schließzustand der Türen geschlossen werden.

In einer Ausführungsform ist vorgesehen, dass eine Identifikationskennung einer erfassten Person und/oder eines erfassten Objektes erfasst oder empfangen wird, wobei die erfasste oder empfangene Identifikationskennung mit einer bestimmten Position der Person und/oder einer bestimmten Position des Objektes im Innenraum des Kraftfahrzeugs verknüpft und an mindestens einen Server übermittelt wird. Hierdurch kann ein Belegungszustand der Sitze eines Kraftfahrzeuges, beispielsweise eines Taxis oder eines Minibusses, erfasst und eindeutig einer Person zugeordnet werden. Es lässt sich daher feststellen, wann eine Person (oder ein Objekt) an welcher Position im Kraftfahrzeug transportiert wurde. Hierdurch können beispielsweise eine Abrechnung automatisiert werden oder mögliche Kontaktwege von Personen im Rahmen des Seuchenschutzes erfasst und aufgezeichnet werden. Die Identifikationskennung kann beispielsweise eine eindeutige Identifikationskennung einer Person (oder eines Objektes) sein und kann beispielsweise über ein Smartphone der Person oder einen Radio Frequency Identification (RFID)-Tag am Smartphone oder der Person (oder an dem Objekt) erfasst bzw. an die Steuereinrichtung übermittelt werden. Insbesondere wird neben der Identifikationskennung und der Position auch mindestens eine Zeitangabe, beispielsweise ein Zeitstempel oder ein Zeitintervall, an den Server übermittelt, wobei die Zeitangabe angibt, wann und/oder wie lange sich die Person oder das Objekt an der bestimmten Position im Innenraum im Kraftfahrzeug aufgehalten hat.

Grundsätzlich kann vorgesehen sein, das Verfahren mit entsprechend angeordneten UWB-Antennen auch in anderen Fahrzeugen, beispielsweise Schienenfahrzeugen, Schiffen oder Luftfahrzeugen durchzuführen.

In einer Ausführungsform ist vorgesehen, dass beim Erfassen weitere in weiteren unterschiedlichen Türen des Kraftfahrzeugs angeordnete UWB-Antennen verwendet werden, wobei in einem aktiven Betriebsmodus und/oder in einem passiven Betriebsmodus erfasste Signale tomographisch ausgewertet werden. Geeignete tomographische Auswertungsverfahren sind grundsätzlich bekannt.

In einer Ausführungsform ist vorgesehen, dass das Auswerten das Bestimmen von einer Körperhaltung und/oder von mindestens einer physiologischen Größe einer erfassten Person und/oder das Bestimmen von einer Größe und/oder von Abmessungen eines erfassten Objektes umfasst. Hierdurch können Eingangsdaten für Assistenzfunktionen des Kraftfahrzeugs erzeugt und bereitgestellt werden. Beispielsweise kann als physiologische Größe mindestens ein Vitalparameter einer Person, wie beispielsweise eine Atem- oder Herzfrequenz bestimmt werden. Das Bestimmen erfolgt beispielsweise durch Auswerten einer aus den erfassten Signalen für eine Person oder ein Objekt abgeleiteten äußeren Kontur der Person oder des Objektes. Beim Bestimmen können auch Verfahren des Maschinenlernens zum Einsatz kommen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Kraftfahrzeugs (aktiver Betriebsmodus der UWB-Antennen schematisch dargestellt);
- Fig. 2: eine schematische Darstellung einer Ausführungsform des Kraftfahrzeugs (passiver Betriebsmodus der UWB-Antennen schematisch dargestellt).

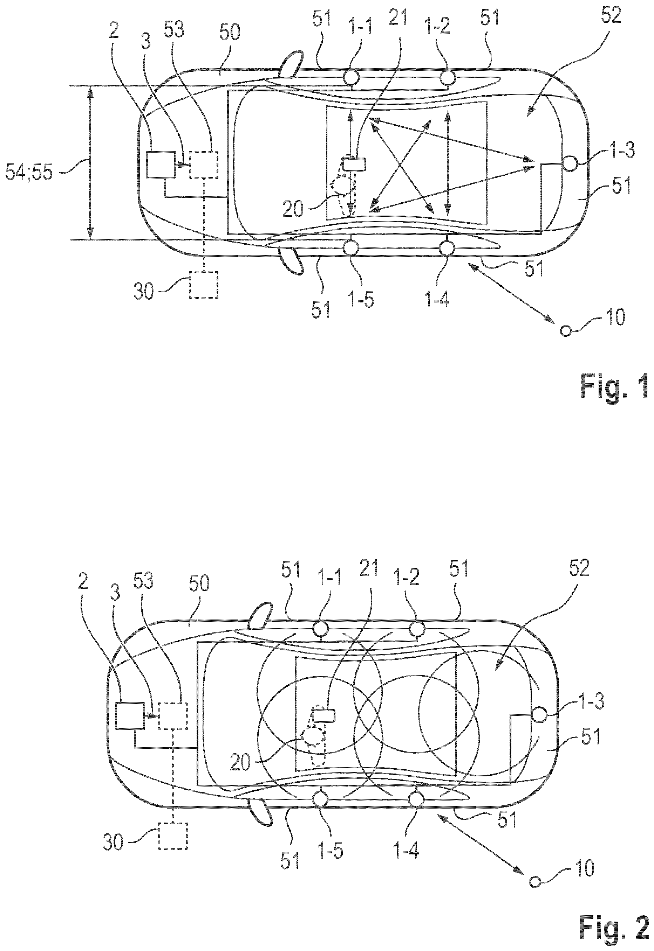

In Fig. 1 ist eine schematische Darstellung einer Ausführungsform des Kraftfahrzeugs 50 gezeigt. Das Kraftfahrzeug 50 umfasst an jeder Tür 51 eine UWB-Antenne 1-x. Ferner umfasst das Kraftfahrzeug 50 eine Steuereinrichtung 2, die mit den UWB-Antennen 1-x signaltechnisch verbunden ist, beispielsweise über einen CAN-Bus des Kraftfahrzeugs 50.

Die UWB-Antennen 1-x umfassen jeweils Antennen (nicht gezeigt) und Transceiver (nicht gezeigt) und sind jeweils in oder an unterschiedlichen Türen 51 des Kraftfahrzeugs 50 angeordnet. Die UWB-Antennen 1-x dienen einer Kommunikation mit mindestens einem ID-Geber 10 und/oder einer Fernbedienung zumindest zum Ver- und Entriegeln der Türen 51. Die UWB-Antennen 1-x sind jedoch zusätzlich dazu eingerichtet, Personen 20 und/oder Objekte im Innenraum 52 des Kraftfahrzeugs 50 zu erfassen.

Die Steuereinrichtung 2 ist dazu eingerichtet, mittels der UWB-Antennen 1-x erfasste Signale auszuwerten und ein Auswertungsergebnis 3 bereitzustellen. Das Bereitstellen kann beispielsweise das Ausgeben des Auswertungsergebnisses 3 umfassen, beispielsweise in Form eines digitalen Datenpakets. Das Auswertungsergebnis 3 kann beispielsweise an eine Fahrzeugsteuerung 53 übermittelt werden und dort als Eingangsdaten für eine Assistenz- oder Überwachungsfunktion dienen.

Nachfolgend ist eine Ausführungsform des Verfahrens zum Erfassen von Personen und/oder Objekten im Innenraum 52 des Kraftfahrzeugs 50 beschrieben, das mittels des Kraftfahrzeugs 50 ausgeführt wird.

In einer Maßnahme erfolgt in einem aktiven Betriebsmodus, bei dem immer zwei der UWB-Antennen 1-x paarweise miteinander kommunizieren eine Feldstärkemessung für die einzelnen UWB-Antennen 1-x. Hierbei werden insbesondere sämtliche möglichen Kombinationen und Sende-/Empfangsrichtungen von UWB-Antennen 1-x durchpermutiert. Beim Auswerten kann über einen Vergleich mit Referenzwerten, die für einen Innenraum 53 des Kraftfahrzeugs 50 ohne darin angeordnete Personen 20 oder Objekte erfasst wurden, festgestellt werden, ob sich Personen 20 oder Objekte in den einzelnen Signalwegen zwischen den UWB-Antennen 1-x bzw. im Innenraum 52 des Kraftfahrzeugs 50 befinden, da Personen 20 und Objekte im Signalweg zu einer Dämpfung und Signalabschwächung führen. Beim Auswerten kann vorgesehen sein, an sich bekannte Verfahren des Maschinenlernens zu verwenden, um beispielsweise aus einer Kombination der erfassten Signale auch Positionen und/oder eine Art der Objekte zu ermitteln.

Zusätzlich oder alternativ können die UWB-Antennen 1-x in einem passiven Betriebsmodus betrieben werden. Dieser Betriebsmodus ist schematisch in der Fig. 2 dargestellt. Hierbei wird zwischen den UWB-Antennen 1-x keine Kommunikationsverbindung ausgebildet, sondern die UWB-Antennen 1-x werden in einem Radarmodus betrieben, bei dem die Transceiver der einzelnen UWB-Antennen 1-x Impulse aussenden und Reflexionen der Impulse, die durch Personen 20 oder Objekte hervorgerufen werden, erfassen. Aus den jeweils mittels der unterschiedlichen UWB-Antennen 1-x an unterschiedlichen Positionen und aus unterschiedlichen Richtungen erfassten Reflexionen, die jeweils ein dreidimensionales Abbild der unmittelbaren Umgebung der jeweiligen UWB-Antenne 1-x repräsentieren, kann auf das Vorhandensein von Personen und/oder von Objekten im Innenraum 52 des Kraftfahrzeugs 50 geschlossen werden. Die erfassten Signale der UWB-Antennen 1-x können hierbei miteinander fusioniert werden.

Um das Erfassen gegenseitig nicht zu beeinflussen, ist insbesondere vorgesehen, dass das Erfassen reihum erfolgt, wobei immer nur eine der UWB-Antennen 1-x zum gleichen Zeitpunkt sendet.

Die Steuereinrichtung 2 wertet die jeweils erfassten Signale und/oder die fusionierten Signale aus und bestimmt hieraus, beispielsweise über eine Korrelation der erfassten Signale oder mittels eines an sich bekannten Verfahrens des Maschinenlernens, eine Information darüber, ob sich Personen 20 oder Objekte im Innenraum 52 befinden oder nicht.

Es kann vorgesehen sein, dass das Erfassen sowohl in einem aktiven Betriebsmodus (Fig. 1) als auch in einem passiven Betriebsmodus (Fig. 2) der UWB-Antennen 1-x erfolgt. Die jeweils für die beiden Betriebsmodi erfassten Signale können ebenfalls miteinander fusioniert werden und als fusionierte Signale ausgewertet werden.

Grundsätzlich ist auch eine Fusion der erfassten Signale mit Sensordaten anderer im Innenraum 52 des Kraftfahrzeugs 50 verbauter Sensoren möglich.

Es kann vorgesehen sein, dass in einem passiven Betriebsmodus von einer UWB-Antenne 1-x ausgesandte Signale auch von anderen UWB-Antennen 1-x erfasst werden, wobei die jeweils erfassten Signale der anderen UWB-Antennen 1-x ebenfalls ausgewertet werden. Hierdurch lässt sich eine Datenbasis vergrößern und somit ein detaillierteres Abbild des Innenraums 52 erfassen. Hierbei ist insbesondere vorgesehen, dass die jeweils anderen UWB-Antennen 1-x in der Zeit, wo die betrachtete UWB-Antenne 1-x im passiven Betriebsmodus einen Impuls aussendet, selbst keine Impulse aussenden, sondern lediglich den von der sendenden Antenne 1-x ausgesandten Impuls und dessen Reflexionen erfassen.

Es kann vorgesehen sein, dass das Auswerten ein Bestimmen einer Position und/oder einer Positionsänderung einer erfassten Person 20 und/oder eines erfassten Objektes im Innenraum 52 des Kraftfahrzeugs 50 aus den erfassten Signalen der UWB-Antennen 1-x umfasst.

Es kann vorgesehen sein, dass das Auswerten ein Berechnen eines dreidimensionalen Abbildes des Innenraums 52 des Kraftfahrzeugs 50 aus den erfassten Signalen der UWB-Antennen 1-x umfasst. Hierbei kann beispielsweise eine Korrelation der erfassten Signale durchgeführt werden, um Personen 20 und/oder Objekte im Innenraum 52 zu erkennen und abzubilden. Alternativ oder zusätzlich können auch an sich bekannte Maschinenlernverfahren verwendet werden, um Personen 20 und/oder Objekte im Innenraum zu erkennen und abzubilden.

Es kann vorgesehen sein, dass in einem aktiven Betriebsmodus der UWB-Antennen 1-x mindestens ein Abstand 54 zwischen den mindestens zwei UWB-Antennen 1-x bestimmt wird, wobei der bestimmte mindestens eine Abstand 54 mit mindestens einem vorgegebenen Abstandswert 55 verglichen wird, und wobei das Erfassen von Personen 20 und/oder Objekten im Innenraum 52 des Kraftfahrzeugs 50 gestartet wird, wenn das Vergleichsergebnis ergibt, dass der bestimmte Abstand 54 dem mindestens einen vorgegebenen Abstandswert 55 entspricht. Hierdurch wird das Verfahren immer dann gestartet, wenn die Türen 51 des Kraftfahrzeugs 50 geschlossen sind. Der vorgegebene mindestens eine Abstandswert 55 entspricht insbesondere einem Abstand zwischen den jeweils betrachteten UWB-Antennen 1-x bei geschlossenen Türen 51. Beim Vergleichen wird eine auftretende Messtoleranz berücksichtigt. Insbesondere kann das Verfahren immer dann gestartet werden, wenn festgestellt wird, dass alle bestimmten Abstände 54 jeweils vorgegebenen Abstandswerten 55 entsprechen, das heißt wenn festgestellt wird, dass alle Türen 51 des Kraftfahrzeugs 50 geschlossen sind.

Es kann vorgesehen sein, dass eine Identifikationskennung 21 einer erfassten Person 20 und/oder eines erfassten Objektes erfasst oder empfangen wird, wobei die erfasste oder empfangene Identifikationskennung 21 mit einer bestimmten Position der Person 20 und/oder einer bestmimten Position des Objektes im Innenraum 52 des Kraftfahrzeugs 50 verknüpft und mittels der Steuereinrichtung 2, beispielsweise über eine Kommunikationsschnittstelle (nicht gezeigt) des Kraftfahrzeugs, an mindestens einen Server 30 übermittelt wird.

Es kann vorgesehen sein, dass in einem aktiven Betriebsmodus und/oder in einem passiven Betriebsmodus erfasste Signale mittels der Steuereinrichtung 2 tomographisch ausgewertet werden. Hierbei werden an sich bekannte tomographische Auswertungsverfahren verwendet.

Es kann vorgesehen sein, dass das Auswerten das Bestimmen von einer Körperhaltung und/oder von mindestens einer physiologischen Größe einer erfassten Person 20 und/oder das Bestimmen von einer Größe und/oder von Abmessungen eines erfassten Objektes umfasst. Hierbei wertet die Steuereinrichtung 2 insbesondere auch eine Änderung in den erfassten Signalen über mehrere Zeitschritte aus. Auf diese Weise lässt sich beispielsweise eine Atemfrequenz über das Heben und Senken eines Brustkorbs einer erfassten Person 20 bestimmen etc.

### Bezugszeichenliste

- 1-x: UWB-Antenne
- 2: Steuereinrichtung
- 3: Auswertungsergebnis
- 10: ID-Geber
- 20: Person
- 21: Identifikationskennung
- 30: Server
- 50: Kraftfahrzeug
- 51: Tür
- 52: Innenraum
- 53: Fahrzeugsteuerung
- 54: Abstand
- 55: vorgegebener Abstandswert

## Patentansprüche

1. Verfahren zum Erfassen von Personen (20) und/oder Objekten im Innenraum (52) eines Kraftfahrzeugs (50),
wobei Personen (20) und/oder Objekte im Innenraum des Kraftfahrzeugs (50) mittels mindestens zwei UWB-Antennen (1-x) erfasst werden, die jeweils in oder an unterschiedlichen Türen (51) des Kraftfahrzeugs (50) angeordnet sind und einer Kommunikation mit mindestens einem ID-Geber (10) und/oder einer Fernbedienung zumindest zum Ver- und Entriegeln der Türen (51) dienen, und wobei mittels der mindestens zwei UWB-Antennen (1-x) erfasste Signale mittels einer Steuereinrichtung (2) ausgewertet werden und ein Auswertungsergebnis (3) bereitgestellt wird.

2. Verfahren nach Anspruch 1, **dadurch gekennzeichnet, dass** das Erfassen sowohl in einem aktiven Betriebsmodus als auch in einem passiven Betriebsmodus der mindestens zwei UWB-Antennen (1-x) erfolgt.

3. Verfahren nach einem der vorangegangenen Ansprüche, **dadurch gekennzeichnet, dass** in einem passiven Betriebsmodus von einer UWB-Antenne (1-x) ausgesandte Signale auch von anderen UWB-Antennen (1-x) erfasst werden, wobei die jeweils erfassten Signale der anderen UWB-Antennen (1-x) ebenfalls ausgewertet werden.

4. Verfahren nach einem der vorangegangenen Ansprüche, **dadurch gekennzeichnet, dass** das Auswerten ein Bestimmen einer Position und/oder einer Positionsänderung einer erfassten Person (20) und/oder eines erfassten Objektes im Innenraum (52) des Kraftfahrzeugs (50) aus den erfassten Signalen der mindestens zwei UWB-Antennen (1-x) umfasst.

5. Verfahren nach einem der vorangegangenen Ansprüche, **dadurch gekennzeichnet, dass** das Auswerten ein Berechnen eines dreidimensionalen Abbildes des Innenraums (52) des Kraftfahrzeugs (50) aus den erfassten Signalen der mindestens zwei UWB-Antennen (1-x) umfasst.

6. Verfahren nach einem der vorangegangenen Ansprüche, **dadurch gekennzeichnet, dass** in einem aktiven Betriebsmodus der mindestens zwei UWB-Antennen (1-x) mindestens ein Abstand (54) zwischen den mindestens zwei UWB-Antennen (1-x) bestimmt wird, wobei der bestimmte mindestens eine Abstand (54) mit mindestens einem vorgegebenen Abstandswert verglichen wird, und wobei das Erfassen von Personen (20) und/oder Objekten im Innenraum (52) des Kraftfahrzeugs (50) gestartet wird, wenn das Vergleichsergebnis ergibt, dass der bestimmte Abstand (54) dem mindestens einen vorgegebenen Abstandswert (55) entspricht.

7. Verfahren nach einem der vorangegangenen Ansprüche, **dadurch gekennzeichnet, dass** eine Identifikationskennung (21) einer erfassten Person (20) und/oder eines erfassten Objektes erfasst oder empfangen wird, wobei die erfasste oder empfangene Identifikationskennung (21) mit einer bestimmten Position der Person (20) und/oder einer bestmimten Position des Objektes im Innenraum (52) des Kraftfahrzeugs (50) verknüpft und an mindestens einen Server (30) übermittelt wird.

8. Verfahren nach einem der vorangegangenen Ansprüche, **dadurch gekennzeichnet, dass** beim Erfassen weitere in weiteren unterschiedlichen Türen (51) des Kraftfahrzeugs (50) angeordnete UWB-Antennen (1-x) verwendet werden, wobei in einem aktiven Betriebsmodus und/oder in einem passiven Betriebsmodus erfasste Signale tomographisch ausgewertet werden.

9. Verfahren nach einem der vorangegangenen Ansprüche, **dadurch gekennzeichnet, dass** das Auswerten das Bestimmen von einer Körperhaltung und/oder von mindestens einer physiologischen Größe einer erfassten Person (20) und/oder das Bestimmen von einer Größe und/oder von Abmessungen eines erfassten Objektes umfasst.

10. Kraftfahrzeug (50), umfassend:
mindestens zwei UWB-Antennen (1-x), wobei die mindestens zwei UWB-Antennen (1-x) jeweils in oder an unterschiedlichen Türen (51) des Kraftfahrzeugs (50) angeordnet sind, und wobei die mindestens zwei UWB-Antennen (1-x) einer Kommunikation mit mindestens einem ID-Geber (10) und/oder einer Fernbedienung zumindest zum Ver- und Entriegeln der Türen dienen, und wobei die mindestens zwei UWB-Antennen (1-x) dazu eingerichtet sind, Personen (20) und/oder Objekte im Innenraum (52) des Kraftfahrzeugs (50) zu erfassen; und
eine Steuereinrichtung (2),
wobei die Steuereinrichtung (2) dazu eingerichtet ist, mittels der mindestens zwei UWB-Antennen (1-x) erfasste Signale auszuwerten und ein Auswertungsergebnis (3) bereitzustellen.
